# EUROPEAN PATENT SPECIFICATION

(11) **EP 0 612 698 B1**
(45) Date of publication and mention of the grant of the patent: **15.09.1999**
(21) Application number: 94102615.5
(22) Date of filing: 22.02.1994
(51) Int. Cl.: C03B 7/086

(54) **Multiple orifice glass feed system**
Glasspeisevorrichtung mit mehreren Öffnungen
Avant-corps à orifices multiples pour alimenter du verre fondu

(30) Priority: 25.02.1993 US 22242
(43) Date of publication of application: 31.08.1994
(73) Proprietor: OWENS-BROCKWAY GLASS CONTAINER INC., Toledo, Ohio 43666 (US)
(72) Inventor: Leidy, Wayne D., Perrysburg, Ohio 43551 (US); DiFrank, Frank J., Toledo, Ohio 43606 (US)
(74) Representative: Blumbach, Kramer & Partner GbR

(56) References cited:
- US-A- 1 761 372
- US-A- 1 926 764
- US-A- 3 313 612

## Description

This invention relates to an apparatus for controlling glass flow through a plurality of orifices.

In the manufacture of glass articles, it is common to provide a glass forehearth and multiple orifices which are controlled by reciprocable needles or plungers in order to provide the necessary uniform weight of gobs. Plural needles and orifices are utilized in order to maximize glass production.

US-Patent 1,926,764 discloses a glass feeding apparatus where two plungers are arranged side by side and laterally offset from each other. The plungers are linked to levers at the center of each lever. Each lever, at its one end, is connected to a respective stationary support, and at its other end to operation means which includes stroke limiting means. One of the operation means is arranged on the left hand side, and the other one is arranged on the right hand side. In consideration that the plungers are side by side, when side viewed, and the plungers are side by side, when front viewed, the plungers are really diagonally arranged.

Among the objectives of the present invention are to provide a multiple orifice glass system wherein each plunger is individually mounted in association with its respective servomotor; wherein each servo control can be automatically controlled to produce an accurate weight gob during operation; wherein the actuating servo mechanisms are mounted on the side of the forehearth and cannot contaminate the glass and are protected from the heat of the glass; and wherein a single plunger can be monitored, operated and controlled individually.

An objective of a preferred embodiment of the invention is to counterbalance the individual weight of the plunger and support arm.

The invention is defined in claims 1 and 17.

In accordance with a preferred embodiment of the invention there is provided a multiple orifice glass feed system for use with a glass forehearth including a plurality of closely spaced plungers, each of which is individually supported independently of the other. Each plunger is provided with a servo controlled linear actuator and an arm extending between each plunger and its respective actuator. Each servomotor has an axis parallel to the axis of the plungers. An air spring is associated with each plunger for balancing the weight of each plunger and its respective arm. The center lines of the plungers lie generally in a plane. The arms have the major portions thereof generally parallel and closely spaced. A feedback system is provided to monitor the position of each individual needle independently of the other at all times and make corrections to the actual position of the needle if desired.

In one form the center lines of the major portions of the arms are parallel to the plane of the plungers. In another form the center lines of the major portions of the arms are perpendicular to the plane of the plungers. Although the system is especially applicable to a plurality of plungers and is shown as applied to four plungers, it is applicable to a lesser number of plungers or a single plunger.
- FIG. 1: is a part sectional elevational view of a multiple plunger glass system embodying the invention.
- FIG. 2: is a fragmentary plan view of the system.
- FIG. 3: is a fragmentary sectional view on an enlarged scale taken along the line 3-3 in FIG. 2.
- FIG. 4: is a sectional view taken along the line 4-4 in FIG. 3.
- FIG. 5: is a fragmentary plan view of a modified form of glass plunger system.
- Fig. 6: is a fragmentary plan view of a further form of glass plunger system.
- FIG. 7: is an electronic schematic of the control system.
- FIG. 8: is a diagram of the range of motion of a plurality of plungers.

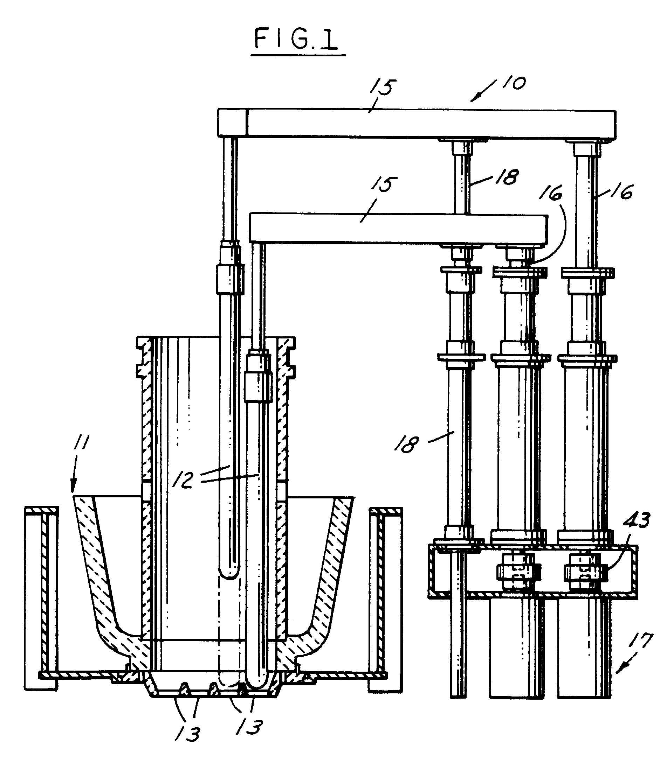

Referring to Fig. 1 to 3, in accordance with the invention, the glass plunger system 10 embodying the invention is associated with a bowl 11 of a forehearth and is intended to support a plurality of plungers or needles 12 that function in connection with orifices 13 to control the flow of glass out of the orifices so that when associated shears, not shown, are used the size and weight of the gobs is consistent.

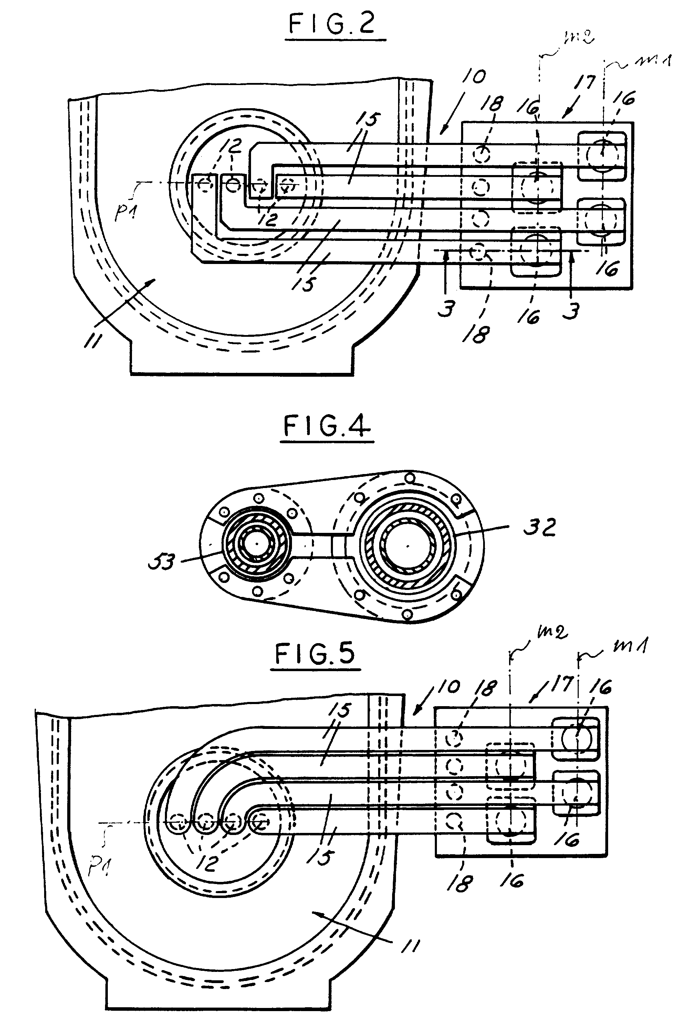

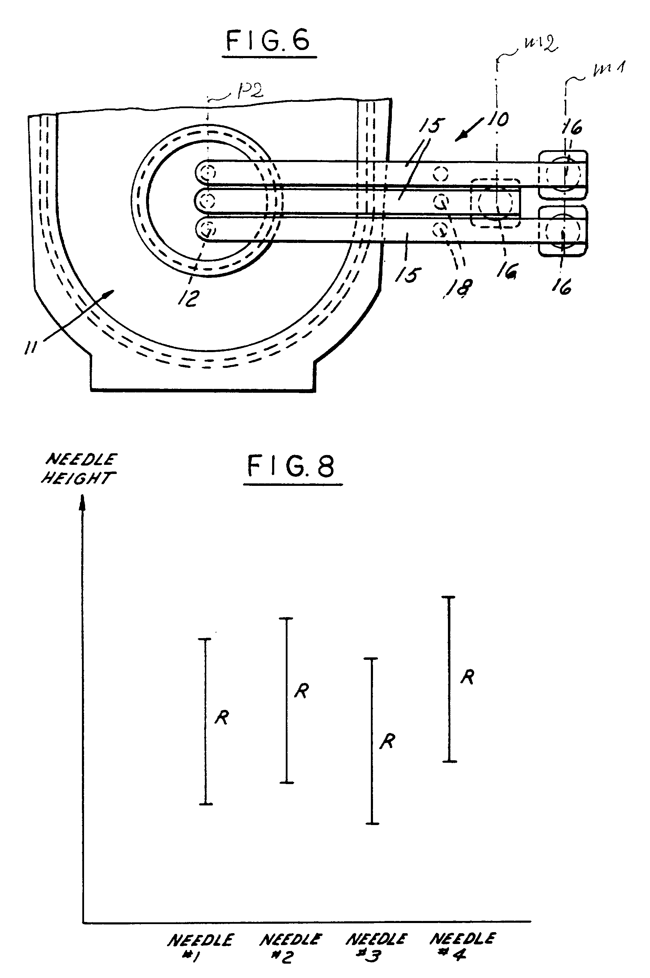

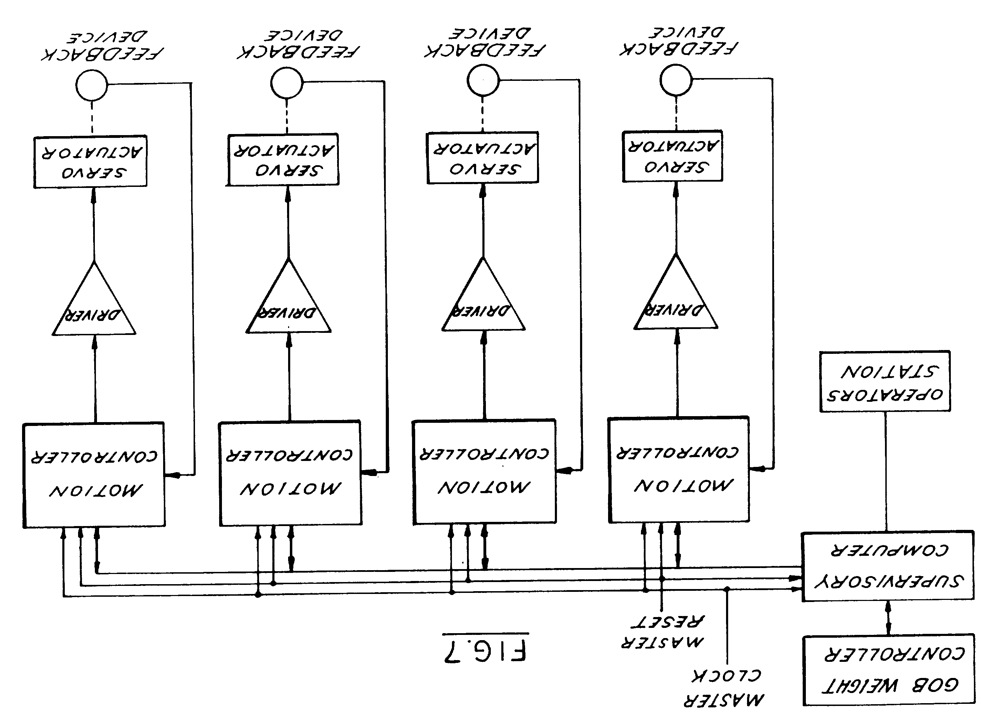

In accordance with the invention, each plunger 12 is supported by a horizontal arm 15 that is connected to the actuator 16 of an operating mechanism 17 which can include an industry motor or a servo-motor. Each arm further includes an air spring 18 associated with its respective arm 15 for balancing the weight of each plunger and its respective arm. The center lines of the plungers lie generally in a first plane P1. The arms 15 have the major portions thereof generally parallel (Fig. 2,5) or perpendicular (Fig. 6) to the plane (P1,P2) of the plungers 12. A feedback system (Fig. 7) is provided to monitor the position of each individual plunger independently of the other at all times and make corrections to the actual position of the plunger if desired.

The arms 15 are constructed and arranged in close proximity so that a minimum of space is utilized and so that the operating mechanisms 17 are in lateral but close proximity to the bowl of the glass. As shown in Fig. 2, one arm 15 is straight and the other three arms are L-shaped, one arm 15 being on one side of straight arm 15 and the other two arm 15 being on the other side of straight arm 15. In the form shown in Fig. 5, all the L-shaped arms are on one side of the straight arm. In both forms, the configuration and size of the L-shaped arms are such that the arms are substantially equidistance from one another throughout their lengths.

In the form shown in Fig. 2, the arms have their free ends extending at a right angle with the plungers 12 attached thereto with the center lines of the plungers 12 lie in a first plane P1. In the form shown in Fig. 5, the ends of the arms are curved to provide the center lines of the plungers 12 in a single plane. In the forms shown in Fig. 6, the arms are entirely straight and the center of the plungers are in a plane P2 that is parallel to the planes m1, m2 containing the servo-motors axes.

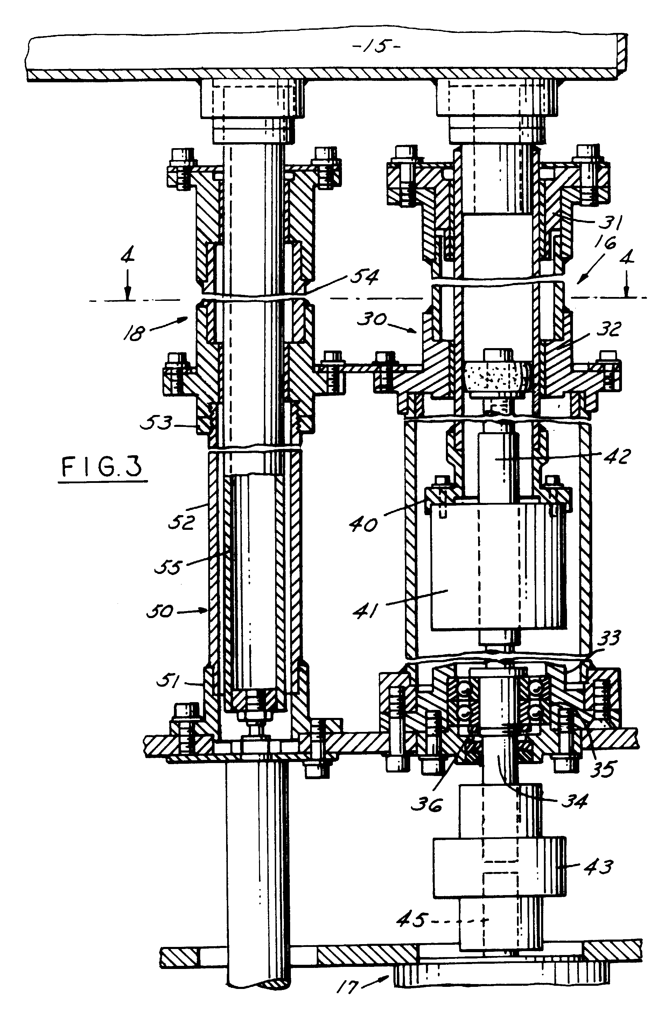

Referring to Fig. 3, the servomotor assembly comprises a welded drive housing 30 and includes a top bearing collar 31, an intermediate bearing collar 32 and lower bearing collar 33. A servo drive shaft 34 is rotatably mounted in the collar 33 by a duplex bearing 35 held in position by retaining nut 36. The actuator 16 is in the form of a welded drive post assembly 40 slidably mounted within the housing 30 and linearly driven by a nut 41 comprising a planetary roller nut or servo nut. The drive shaft 34 supports a lead screw 42 that is associated with the nut 41. A coupling 43 connects the shaft 34 to the shaft of the servo actuator 45. Coupling 43 is preferably of the keyless bushing type which provide a positive lock between servo actuator shaft 45 and drive shaft 34. The keyless bushing allows us the use of the smallest practical shaft diam 34. The reduced shaft inertia reduces the motor load allowing us to use the latest art of the industry motors which are included in the operating mechanism 17. Such a coupling is manufactured and sold by Fenner Mannheim, 311 West Stiegel Street, Mannheim, Pennsylvania under the trademark Trantorque.

Each air cylinder 18 that performs the function of an air spring is provided in close relationship to its respective servomotor assembly and includes a cylinder housing 50 that has a base ring 51, a cylinder housing 52, a jam nut 53 and an upper cylinder weldment 54. An air spring column 55 extends between the shaft of an air spring and a respective arm.

The multiple orifice plunger control system is made up of one to four separate mechanical systems, depending on the number of plungers that are present (1-4). Since each needle is a mechanically independent system, a separate mechanism must be provided for each unit. Referring to FIG. 7, this unit consists of the motion controller, amplifier/driver, servo actuator (which in this case, is an AC servo motor) , and a feedback device (resolver) inside the motor housing. At this level each control system is completely independent.

The feedback device is mounted on the back of the servo motor and serves a dual purpose. It provides position information to the motion controller which is used to determine both the motor rotor position and the position of the plunger.

The rotor position is needed for communication of the motor since it is an AC servo motor. The position of the plungers, is derived from the resolver, and is a relative offset from a fixed reference.

The fixed reference is the end of travel of the lead screw in the extended position.

The amplifier/driver is simply a power amplifier. It converts the torque command inputs to the appropriate voltage and power level for the AC servomotor connected to it.

The motion controller has in its memory a motion profile, generated by the supervisor, that dictates where the particular needle mechanism should be in relationship to the master clock and reset signals. The actual position of the mechanics is determined from the feedback device. The motion controller uses both the actual position, the commanded (profile) position and the rotor position to generate the torque commands that go to the amplifier. The absolute torque command is calculated as a function of the actual and commanded positions. The torque commands that are sent to the amplifier are in a commutated form for phase A and B. The amplitude of the absolute torque command for motor phases A & B is adjusted based on the motor rotor position. The torque command for phase C is calculated in the amplifier, it is the sum of the torque command of A and B.

The supervisor calculates the motion profile for each of the motion controllers based on input from the user. The profile is a position-to-position relationship between a master clock and the desired position of each needle. The same profile is normally used for each needle, but a unique profile for each needle is possible if the situation demands it. The needles are normally synchronized to operate at the same time, reaching the extremes of their motion at the same point in time. The vertical distance is normally the same also. Because of glass flow differences between the orifices, the needle typically operates at different elevations as shown in FIG. 8. This difference in height is used to balance the weight of the gobs produced by the individual orifices. The height adjustment is controlled by the supervisor. If a change in the height relationship between the needles is commanded, by either operator input or from an automatic gob weight control system, the motion profile for the effected needle or needles is recalculated by the supervisor. The profile is then written into the memory of the motion controller. The supervisor is then responsible for synchronizing the change to the new profile so that all the effected motion controllers switch at the same time without a disruption of production.

It can thus be seen that there has been provided a multiple orifice glass system wherein each plunger is individually mounted in association with its respective servo-motor; wherein each servo control can be automatically controlled to produce an accurate weight gob during operation; wherein the actuating servo mechanisms are mounted on the side of the forehearth and cannot contaminate the glass and are protected from the heat of the glass; wherein the individual weight of the plunger and support arms is counterbalanced by an air spring; and wherein a single plunger can be consulted, operated and controlled individually.

## Claims

1. An apparatus for controlling flow of glass through a plurality of discharge orifices (13) lying in a single vertical plane (P1, P2) in a glass forehearth (11), said apparatus comprising
a plurality of closely spaced plungers (12) adapted to be associated with said orifices (13),
each said plunger (12) having a vertical axis,
said vertical axes of said plungers (12) lying in a single plane (P1, P2),
means for supporting each plunger (12) independently of the other including
a plurality of closely spaced arms (15) each associated with one of said plungers, and
a plurality of servo controlled linear actuators (16) each associated with one of said arms,
each said arm (15) having opposed ends,
one end of each arm (15) being untiltably and unrotatably mounted on its associated linear actuator (16),
each linear actuator being independently operable and adapted to move an associated one of said arms (15),
said actuators (16) being closely spaced to one another and mounted on one side of said forehearth (11),
one of said ends of each said arm (15) being connected to one of said plungers (12),
said arms (15) being configured such that the arms have the major portions thereof generally parallel or perpendicular to the plane (P1, P2) of the plungers (12).

2. The apparatus set forth in claim 1,
wherein said means for supporting also includes a plurality of air springs (18), each connected to a respective arm (15) for balancing the weight of each plunger (12).

3. The apparatus set forth in claim 1 or 2
wherein said arms (15) are horizontally arranged.

4. The apparatus set forth in any of claims 1 to 3
wherein said arms (15) have portions intermediate their ends which are the greatest portion of their length and which portions are parallel and equidistant to one another.

5. The apparatus set forth in claim 4
wherein one of said arms is straight and the others of said arms are generally L-shaped.

6. The apparatus set forth in claim 5
wherein each arm (15) has a major portion and a minor portion, the minor portion of each arm being at a right angle to the major portion such that the major portions of the arms are parallel to said first plane (P1) of said plungers (12).

7. The apparatus set forth in claim 6
wherein said straight arm has one side and an other side, one of said L-shaped arms is on one side of said straight arm and the other said L-shaped arms are on the other side of said straight arm.

8. The apparatus set forth in claim 4
including at least three arms (15), one of said arms being straight, the major portions of said other arms being parallel to said straight arms, the other of said arms having one end curved such that the plane (P1) of said plungers (12) on the curved ends of said arms (15) is parallel to said straight arm and the major portions of said other arms.

9. The apparatus set forth in any of claims 1 to 8,
wherein each servo controlled linear actuator (16) includes
a drive post assembly having a welded portion (40) movable to a fixed housing having a welded portion (30), a top bearing collar (31) and an intermediate bearing collar (32) for guiding said movable drive post assembly vertically relative to the fixed housing (30), said plunger arm (15) being mounted on said drive post assembly,
operation means (17) mounted on a fixed apparatus member and
means (34, 43, 45) operatively connecting said movable drive post assembly to said operation means (17) and being mounted in a lower bearing collar (33) of the fixed housing.

10. The apparatus set forth in claim 9 wherein said means (34, 43, 45) operatively connecting said operation means (17) to said drive post assembly comprises a lead screw (42) mounted in said lower bearing collar (33), and wherein a nut (41) is threaded on said lead screw (42) and is the movable driving element of the drive post assembly to which it is fixed.

11. The apparatus set forth in any one of claims 1 to 10 including a motion control system for each said servo-controlled linear actuator (16), each motion control system being independently controllable of the other motion control system and includes operation means (17).

12. The apparatus set forth in claim 11
wherein said motion control system being responsive to an actual position of each said plunger (12) and including means for comparing said position of each said plunger (12) to a preset value to generate a motor torque signal.

13. The apparatus set forth in claim 12
wherein each motion control system includes means for adjusting the height of the respective plunger (12).

14. The apparatus set forth in claim 12 or 13
wherein said motion control system has memory means for a motion profile of each servo-controlled linear actuator (16).

15. The apparatus set forth in claim 14
wherein said motion control system has means for synchronising the movement of said plungers (12).

16. The apparatus set forth in any one of claims 9 to 15,
wherein said operation means (17) for each servo-controlled linear actuator (16) includes a servo-motor.

17. A method for controlling flow of glass through a plurality of discharge orifices (13) lying in a single vertical plane (P1, P2) in a glass forehearth (11) comprising
providing a plurality of closely spaced plungers (12) adapted to be associated with said orifices (13), wherein each said plunger (12) having a vertical axis and the vertical axes of said plungers (12) lie in said single plane (P1, P2),
providing a plurality of closely spaced independently operable servo controlled linear actuators (16) in closely spaced relationship on one side of said forehearth (11),
providing a plurality of closely spaced arms (15), each said arm (15) having opposed ends,
wherein said arms (15) are configured such that the arms have the major portions thereof generally parallel or perpendicular to the plane (P1, P2) of the plungers (12),
connecting one of said ends of each said arm (15) to an associated one of said plungers (12),
connecting the other end of each said arm (15) to a servo controlled actuator (16), such that the arms (15) are horizontally arranged and untiltably and unrotatably connected to and mounted on said servo controlled actuators (16).

## Patentansprüche

1. Vorrichtung zum Steuern des Glasflusses durch eine Vielzahl von Entladeöffnungen (13), die in einer einzigen vertikalen Ebene (P1, P2) in einem Glas-Vorherd (11) angeordnet sind, wobei die Vorrichtung folgende Merkmale umfaßt:
eine Vielzahl von im engen Abstand voneinander angeordneten Plungerkolben (12), die den Öffnungen (13) zugeordnet werden können,
jeder Plungerkolben (12) weist eine vertikale Achse auf,
die vertikale Achsen der Plungerkolben (12) liegen in einer einzigen Ebene (P1, P2),
eine Einrichtung zum Stützen des jeweiligen Plungerkolbens (12) unabhängig von den anderen, mit folgenden Merkmalen:
eine Vielzahl von dicht nebeneinander liegenden Armen (15), die jeweils einem der Plungerkolben zugeordnet sind und
eine Vielzahl von servogesteuerten linearen Betätigungseinrichtungen (16), die jeweils einem Arm zugeordnet sind,
jeder Arm (15) weist sich gegenüber liegende Enden auf,
ein Ende jedes Arms (15) ist an dessen zugeordneter linearer Betätigungseinrichtung (16) so angebracht, daß er nicht dreh- und neigbar ist,
jede lineare Betätigungseinrichtung ist unabhängig betreibbar und kann einen zugeordneten Arm (15) bewegen,
die Betätigungseinrichtungen (16) sind im engen Abstand voneinander angeordnet und an einer Seite des Vorherdes (11) angebracht,
eines der Enden des jeweiligen Arms (15) ist mit einem der Plungerkolben (12) verbunden,
die Arme (15) sind so konstruiert, daß die Hauptabschnitte der Arme im wesentlichen parallel oder senkrecht zur Ebene (P1, P2) der Plungerkolben (12) angeordnet sind.

2. Vorrichtung nach Anspruch 1, dadurch gekennzeichnet, daß die Stützeinrichtung ferner eine Vielzahl von Luftdruckfedern (18) umfaßt, die jeweils mit einem zugeordneten Arm (15) verbunden sind, um das Gewicht der Plungerkolben (12) auszubalancieren.

3. Vorrichtung nach Anspruch 1 oder 2, dadurch gekennzeichnet, daß die Arme (15) in horizontaler Richtung angeordnet sind.

4. Vorrichtung nach einem der Ansprüche 1 bis 3, dadurch gekennzeichnet, daß die Arme (15) zwischen ihren Enden Abschnitte aufweisen, die den größten Teil ihrer Länge darstellen und parallel im gleichen Abstand zueinander liegen.

5. Vorrichtung nach Anspruch 4, dadurch gekennzeichnet, daß einer der Arme gerade ist und die anderen Arme im wesentlichen L-förmig.

6. Vorrichtung nach Anspruch 5, dadurch gekennzeichnet, daß jeder Arm (15) einen Hauptabschnitt und einen kleineren Abschnitt aufweist, wobei der kleinere Abschnitt eines jeden Arms in einem rechten Winkel zum Hauptabschnitt angeordnet ist, so daß die Hauptabschnitte der Arme parallel zur ersten Ebene (P1) des Plungerkolbens (12) angeordnet sind.

7. Vorrichtung nach Anspruch 6, dadurch gekennzeichnet, daß der gerade Arm zwei Seiten aufweist, und sich die L-förmigen Arme an einer Seite des geraden Arms und die anderen L-förmigen Arme an der anderen Seite des geraden Arms befinden.

8. Vorrichtung nach Anspruch 4, dadurch gekennzeichnet, daß diese wenigstens drei Arme (15) umfaßt, daß einer der Arme gerade ist, daß die Hauptabschnitte der anderen Arme parallel zu dem geraden Arm liegen, und daß die anderen Arme jeweils ein gekrümmtes Ende haben, so daß die Ebene (P1) der Plungerkolben (12) an den gekrümmten Enden der Arme (15) parallel zum geraden Arm und den Hauptabschnitten der anderen Arme liegt.

9. Vorrichtung nach einem der Ansprüche 1 bis 8, dadurch gekennzeichnet, daß jede servogesteuerte lineare Betätigungseinrichtung (16) folgende Merkmale umfaßt:
ein Antriebspfostenbauteil mit einem geschweißten Abschnitt (40), der zu einem feststehenden Gehäuse mit einem geschweißten Abschnitt (30) bewegbar ist,
ein oberer Lagerkranz (31) und ein mittlerer Lagerkranz (32) zum Führen des bewegbaren Antriebspfostenbauteils vertikal relativ zum fixierten Gehäuse (30),
der Plungerkolbenarm (15) ist an das Antriebspfostenbauteil montiert,
eine Antriebseinrichtung (17), die an ein feststehendes Vorrichtungselement montiert ist, und
Einrichtungen (34, 43, 45), die im Betrieb das bewegbare Antriebspfostenbauteil mit der Antriebseinrichtung (17) verbinden und in einem unteren Lagerkranz (33) des feststehenden Gehäuses montiert sind.

10. Vorrichtung nach Anspruch 9, dadurch gekennzeichnet, daß die Einrichtungen (34, 43, 45), die betriebsmäßig die Antriebseinrichtung (17) mit dem Antriebspfostenbauteil verbinden, eine Leitspindel (42) umfassen, die in dem unteren Lagerkranz (33) gelagert ist, wobei eine Mutter (41) mit diese Leitspindel (42) verschraubt ist und das bewegbare Antriebselement des Antriebspfostenbauteils darstellt, an welchem es fixiert ist.

11. Vorrichtung nach einem der Ansprüche 1 bis 10, dadurch gekennzeichnet, daß diese ein Bewegungssteuersystem für jeden der servogesteuerten linearen Betätigungseinrichtungen (16) umfaßt, wobei jedes Bewegungssteuersystem unabhängig von dem anderen Bewegungssteuersystem steuerbar ist und die jeweilige Antriebseinrichtung (17) umfaßt.

12. Vorrichtung nach Anspruch 11, dadurch gekennzeichnet, daß das Bewegungssteuersystem auf die aktuelle Position jedes Plungerkolbens (12) anspricht und eine Einrichtung zum Vergleichen der Position eines jeden Plungerkolbens (12) mit einem voreingestellten Wert umfaßt, um ein Motordrehsignal zu erzeugen.

13. Vorrichtung nach Anspruch 12, dadurch gekennzeichnet, daß das Bewegungssteuersystem eine Einrichtung zum Einstellen der Höhe des zugeordneten Plungerkolbens (12) umfaßt.

14. Vorrichtung nach Anspruch 12 oder 13, dadurch gekennzeichnet, daß das Bewegungssteuersystem eine Speichereinrichtung für ein Bewegungsprofil der jeweiligen servogesteuerten linearen Betätigungseinrichtung (16) umfaßt.

15. Vorrichtung nach Anspruch 14, dadurch gekennzeichnet, daß das Bewegungssteuersystem eine Einrichtung zum Synchronisieren der Plungerkolbenbewegung (12) umfaßt.

16. Vorrichtung nach einem der Ansprüche 9 bis 15, dadurch gekennzeichnet, daß die Antriebseinrichtung (17) für jede servogesteuerte lineare Betätigungseinrichtung (16) einen Servomotor umfaßt.

17. Verfahren zum Steuern des Glasflusses durch eine Vielzahl von Entladungsöffnungen (13), die in einer einzigen vertikalen Ebene (P1, P2) in einem Glas-Vorherd (11) angeordnet sind, mit folgenden Schritten:
Eine Vielzahl von in engen Abstand zueinander angeordneten Plungerkolben (12) werden bereitgestellt, die den Öffnungen (13) zugeordnet werden können, wobei jeder Plungerkolben (12) eine vertikale Achse aufweist und die vertikalen Achsen des jeweiligen Plunger (12) in einer einzigen Ebene (P1, P2) liegen,
eine Vielzahl von in engem Abstand zueinander angeordneten unabhängig voneinander arbeitenden servogesteuerten linearen Betätigungseinrichtungen (16) werden in engem Abstand zueinander an einer Seite des Vorherdes (11) angeordnet,
eine Vielzahl von in engem Abstand zueinanderliegenden Armen (15) werden bereitgestellt, wobei jeder der Arme sich gegenüberliegende Enden aufweist, wobei die Arme (15) derart gestaltet sind, daß die Hauptabschnitte der Arme im wesentlichen parallel oder senkrecht zur Ebene (P1, P2) der Plungerkolben (12) angeordnet sind,
ein Ende des Arms (15) wird mit einem der zugeordneten Plungerkolben (12) verbunden;
das andere Ende des jeweiligen Arms (15) wird mit einer servogesteuerten Betätigungseinrichtung (16) so verbunden, daß die Arme (15) horizontal angeordnet sind und mit den servogesteuerten Betätigungseinrichtungen (16) neige- und drehfrei verbunden sind.

## Revendications

1. Dispositif pour contrôler l'écoulement de verre à travers une pluralité d'orifices de décharge (13) se trouvant dans un plan vertical unique (P1, P2) dans un avant-creuset de verre (11), ledit dispositif comprenant :
une pluralité de plongeurs étroitement espacés (12) adaptés pour être associés avec lesdits orifices (13),
chacun desdits plongeurs (12) ayant un axe vertical,
lesdits axes verticaux desdits plongeurs (12) se trouvant dans un plan unique (P1, P2),
des moyens pour supporter chaque plongeur (12) indépendamment de l'autre, comprenant :
une pluralité de bras étroitement espacés (15) associés chacun avec l'un desdits plongeurs, et
une pluralité de vérins linéaires servo-commandés (16) associés chacun avec l'un desdits bras,
chacun desdits bras (15) comportant des extrémités opposées,
une extrémité de chaque bras (15) étant montée de façon à ne pas pouvoir être inclinée et à ne pas pouvoir tourner sur son vérin linéaire associé (16),
chaque vérin linéaire étant susceptible d'être actionné et adapté indépendamment pour déplacer un bras associé parmi lesdits bras (15),
lesdits vérins (16) étant étroitement espacés les uns des autres et montés sur un côté dudit avant-creuset (11),
l'une desdites extrémités de chacun desdits bras (15) étant raccordée à l'un desdits plongeurs (12),
lesdits bras (15) étant configurés de telle sorte que les bras aient leurs parties principales globalement parallèles ou perpendiculaires au plan (P1, P2) des plongeurs (12).

2. Dispositif selon la revendication 1, dans lequel lesdits moyens de support comprennent également une pluralité de ressorts à air (18), raccordés chacun à un bras respectif (15) pour équilibrer le poids de chaque plongeur (12).

3. Dispositif selon la revendication 1 ou 2, dans lequel lesdits bras (15) sont disposés horizontalement.

4. Dispositif selon l'une quelconque des revendications 1 à 3, dans lequel lesdits bras (15) comprennent des parties entre leurs extrémités qui constituent la plus grande partie de leur longueur, ces parties étant parallèles et équidistantes les unes par rapport aux autres.

5. Dispositif selon la revendication 4, dans lequel l'un desdits bras est rectiligne, et les autres desdits bras sont globalement en forme de L.

6. Dispositif selon la revendication 5, dans lequel chaque bras (15) comporte une partie principale et une partie secondaire, la partie secondaire de chaque bras étant à angle droit par rapport à la partie principale, de telle sorte que les parties principales des bras soient parallèles audit premier plan (P1) desdits plongeurs (12).

7. Dispositif selon la revendication 6, dans lequel ledit bras rectiligne comporte un côté et un autre côté, l'un desdits bras en forme de L se trouvant sur un côté dudit bras rectiligne, et l'autre desdits bras en forme de L se trouvant sur l'autre côté dudit bras rectiligne.

8. Dispositif selon la revendication 4, comprenant au moins trois bras (15), l'un desdits bras étant rectiligne, les parties principales desdits autres bras étant parallèles audit bras rectiligne, l'autre desdits bras comportant une extrémité incurvée de telle sorte que le plan (P1) desdits plongeurs (12) sur les extrémités incurvées desdits bras (15) soit parallèle audit bras rectiligne et aux parties principales desdits autres bras.

9. Dispositif selon l'une quelconque des revendications 1 à 8, dans lequel chaque vérin linéaire servo-commandé (16) comprend :
un ensemble de montant d'entraînement comportant une partie soudée (40) mobile vers un boîtier fixe comportant une partie soudée (30), un collier de palier supérieur (31) et un collier de palier intermédiaire (32) pour guider ledit ensemble de montant d'entraînement mobile verticalement par rapport au boîtier fixe (30), ledit bras de plongeur (15) étant monté sur ledit ensemble de montant d'entraînement,
des moyens d'actionnement (17) montés sur un élément de dispositif fixe, et
des moyens (34, 43, 45) reliant de façon opérationnelle ledit ensemble de montant d'entraînement mobile audits moyens d'actionnement (17), et montés dans un collier de palier inférieur (33) du boîtier fixe.

10. Dispositif selon la revendication 9, dans lequel lesdits moyens (34, 43, 45) reliant de façon opérationnelle lesdits moyens d'actionnement (17) audit ensemble de montant d'entraînement comprennent une tige filetée (42) montée dans ledit collier de palier inférieur (33), et dans lequel un écrou (41) est vissé sur ladite tige filetée (42) et constitue l'élément d'entraînement mobile de l'ensemble de montant d'entraînement auquel il est fixé.

11. Dispositif selon l'une quelconque des revendications 1 à 10, comprenant un système de commande de mouvement pour chacun desdits vérins linéaires servo-commandés (16), chaque système de commande de mouvement pouvant être commandé indépendamment de l'autre système de commande de mouvement, et comprenant des moyens d'actionnement (17).

12. Dispositif selon la revendication 11, dans lequel ledit système de commande de mouvement réagit à une position réelle de chacun desdits plongeurs (12) et comprend des moyens pour comparer ladite position de chacun desdits plongeurs (12) à une valeur prédéterminée de façon à générer un signal de couple moteur.

13. Dispositif selon la revendication 12, dans lequel chaque système de commande de mouvement comprend des moyens pour ajuster la hauteur du plongeur respectif (12).

14. Dispositif selon la revendication 12 ou 13, dans lequel ledit système de commande de mouvement comporte des moyens formant mémoire pour un profil de mouvement de chaque vérin linéaire servo-commandé (16).

15. Dispositif selon la revendication 14, dans lequel ledit système de commande de mouvement comporte des moyens pour synchroniser le mouvement desdits plongeurs (12).

16. Dispositif selon l'une quelconque des revendications 9 à 15, dans lequel lesdits moyens d'actionnement (17) pour chaque vérin linéaire servo-commandé (16) comprennent un servo-moteur.

17. Procédé pour contrôler l'écoulement de verre à travers une pluralité d'orifices de décharge (13) se trouvant dans un plan vertical unique (P1, P2) dans un avant-creuset de verre (11), comprenant :
le fait de disposer une pluralité de plongeurs étroitement espacés (12) adaptés pour être associés avec lesdits orifices (13), chacun desdits plongeurs (12) ayant un axe vertical, et les axes verticaux desdits plongeurs (12) se trouvant dans ledit plan unique (P1, P2),
le fait de disposer une pluralité de vérins linéaires servo-commandés (16) pouvant être actionnés indépendamment et étroitement espacés (16) en relation étroitement espacée sur un côté dudit avant-creuset (11),
le fait de disposer une pluralité de bras étroitement espacés (15), chacun desdits bras (15) comportant des extrémités opposées,
dans lequel lesdits bras (15) sont configurés de telle sorte que les bras aient leurs parties principales qui sont globalement parallèles ou perpendiculaires au plan (P1, P2) des plongeurs (12),
le raccordement de l'une desdites extrémités de chacun desdits bras (15) à un plongeur associé parmi lesdits plongeurs (12),
le raccordement de l'autre extrémité de chacun desdits bras (15) à un vérin servo-commandé (16), de telle sorte que les bras (15) soient disposés horizontalement et raccordés de façon à ne pas pouvoir être inclinés et à ne pas pouvoir tourner auxdits vérins servo-commandés (16) et montés sur ceux-ci.
